# EUROPÄISCHE PATENTSCHRIFT

(11) **EP 2 193 895 B1**
(45) Veröffentlichungstag und Bekanntmachung des Hinweises auf die Patenterteilung: **22.05.2013**
(21) Anmeldenummer: 09014593.9
(22) Anmeldetag: 24.11.2009
(51) Int. Cl.: B27B 5/065, B27B 5/075

(54) **Plattenaufteilanlage sowie Verfahren zu deren Betrieb**
Board partitioning device and method for operating same
Installation de découpe de plaques et son procédé de fonctionnement

(30) Priorität: 05.12.2008 DE 102008060751; 20.03.2009 DE 202009004022 U
(43) Veröffentlichungstag der Anmeldung: 09.06.2010
(73) Patentinhaber: HOLZMA Plattenaufteiltechnik GmbH, 75365 Calw-Holzbronn (DE)
(72) Erfinder: Mömesheim, Arne, 75378 Bad Liebenzell (DE); Oertel, Wolfgang, 72461 Albstadt (DE); Seeger, Ingolf, 72160 Horb-Nordstetten (DE); Sörgel, Rudolf, 75385 Bad Teinach (DE); Martynenko, Sergey, 71083 Herrenberg (DE); Blaich, Markus, 75365 Calw-Stammheim (DE); Brock, Reiner, 72218 Wildberg (DE); Esser, Kim, 71126 Gäufelden (DE); Gsell, Rainer, 71083 Herrenberg (DE); Hartmann, Gerhard, 72224 Ebhausen-Rotfelden (DE)
(74) Vertreter: Dreiss

(56) Entgegenhaltungen:
- EP-A1- 0 292 635
- EP-A1- 0 455 095
- EP-A2- 1 925 410
- WO-A1-00/47377
- WO-A1-03/078097
- WO-A1-2006/024058
- DE-C1- 3 609 331

## Beschreibung

Die Erfindung betrifft eine Plattenaufteilanlage nach dem Oberbegriff des Anspruchs 1 sowie ein Verfahren zu deren Betrieb nach dem Oberbegriff des nebengeordneten Patentanspruchs 10. Eine solche Plattenaufteilanlage ist der DE 36 09 331 C1 zu entnehmen.

Die DE 36 09 331 C1 beschreibt eine Plattenaufteilanlage, die einen ersten Bearbeitungswagen umfasst, an dem eine Hauptsäge und eine Vorritzsäge angeordnet sind. Die bekannte Plattenaufteilanlage verfügt ferner über einen zweiten Bearbeitungswagen, der auf derselben Führungseinrichtung wie der erste Bearbeitungswagen quer zur Vorschubrichtung verfahrbar gehalten ist. Der zweite Bearbeitungswagen weist eine Mehrzahl von Bohrwerkzeugen auf und ist über eine Kupplung an den ersten Bearbeitungswagen ankoppelbar. Die DE 198 59 792 A1 beschreibt eir.e Plattenaufteilanlage mit einem einzigen Bearbeitungswagen, an dem unterschiedliche Werkzeuge angeordnet sein können. WO 00/47377 A1 beschreibt eine Bearbeitungseinrichtung für plattenförmige Werkstücke mit einem unteren Bearbeitungswagen mit einer Säge und einem oberen Bearbeitungswagen mit einem Fräser.

Aufgabe der vorliegenden Erfindung ist es, eine plattenaufteilanlage bereitzustellen, welche möglichst flexibel betrieben werden kann.

Diese Aufgabe wird durch eine Plattenaufteilanlage mit den Merkmalen des Anspruchs 1 gelöst. Vorteilhafte Weiterbildungen der Erfindung sind in Unteransprüchen angegeben. Eine weitere Lösung ist darüber hinaus in dem nebengeordneten Verfahrensanspruch angegeben.

Die Tatsache, dass der erste Bearbeitungswagen und der zweite Bearbeitungswagen mindestens zeitweise unabhängig voneinander längs der Führungseinrichtung bewegbar sind, und dass die erste Bearbeitungseinrichtung mindestens eine Säge und die zweite Bearbeitungseinrichtung mindestens einen Fräser und/oder Bohrer umfasst, gestattet es, die erfindungsgemäße Plattenaufteilanlage sehr flexibel zu betreiben. So kann der eine Bearbeitungswagen an einer Stelle und der andere Bearbeitungswagen an einer anderen Stelle geziel: positioniert werden, um gleichzeitig ein und dasselbe Werkstück an unterschiedlichen und ganz bestimmten und von Fall zu Fall unterschiedlichen Stellen mittels einer Fräs- urd/oder Bohreinrichtung zu bearbeiten. Möglichst ist beispielsweise gleichzeitiges Bohren, gleichzeitiges Fräsen, gleichzeitiges Fräsen und Bohren, gleichzeitiges Sägen und Fräsen, und gleichzeitiges Sägen und Bohren. Damit wird die Funktionalität einer Plattenaufteilsäge durch die Funktionalität mindestens eines Fräs- und/oder Bohraggregats erweitert und so eine komplette Bearbeitung eines Werkstücks in einer einzigen Maschine ermöglicht. Hierdurch wird die Bearbeitungszeit eines Werkstücks reduziert. Durch ein geeignetes Steuersystem der Bearbeitungswagen kann die aktuelle Position der Bearbeitungswagen jederzeit erfasst werden, so dass eine Kollision der beiden Bearbeitungswagen verhindert wird.

Da beide Bearbeitungswagen dieselbe Führungseinrichtung nutzen, ist praktisch kein zusätzlicher Bauraum erforderlich, so dass die Plattenaufteilanlage weiterhin sehr kompakt bauen kann.

Umfasst beispielsweise die erste Bearbeitungseinrichtung ausschließlich Sägen und die zweite Bearbeitungseinrichtung ausschließlich Fräser und/oder Bohrer, können die Bearbeitungswagen spezifisch auf das jeweilige Werkzeug ausgelegt werden, was konstruktive Vorteile hat. Darüber hinaus hat die Trennung in die unterschiedlichen Funktionen den Vorteil, dass beispielsweise dann, wenn nur Sägeschnitte durchgeführt werden sollen jener Bearbeitungswagen, der die Fräser und/oder Bohrer trägt, überhaupt nicht bewegt werden muss. Hierdurch wird Energie gespart und die Steuerung wird vereinfacht. Außerdem können sich Geschwindigkeitsvorteile ergeben, da der Bearbeitungswagen mit den Fräsern und/oder Bohrern "hinter" dem den Sägeschnitt ausführenden Bearbeitungswagen bereits positioniert werden kann.

Umfassen dagegen beide Bearbeitungswagen jeweils sowohl Sägen und Fräser/Bohrer, können beispielsweise die beiden Bearbeitungswagen identisch ausgeführt werden, was die Kosten senkt. Außerdem können gleichzeitig an unterschiedlichen Stellen beispielsweise Fräs- und/oder Bohrarbeiten ausgeführt werden, was bei bestimmten Einsatzszenarien Zeit spart.

Dabei sei an dieser Stelle darauf hingewiesen, dass hier und nachfolgend der Begriff "Fräser" und "Bohrer" nicht einengend zu verstehen ist. Gemeint sind sämtliche Werkzeuge, mit denen ein Werkstück fräser- oder bohrerartig bearbeitet werden kann. Insbesondere gehören hierzu auch Laser- und Wasserstrahleinrichtungen.

Ein besonderer Vorteil einer Bearbeitungseinrichtung, welche einen Fräser umfasst, besteht in der Möglichkeit, im koordinierten Zusammenwirken der Vorschubeinrichtung und des den Fräser tragenden Bearbeitungswagens Freiformbearbeitungen an einem Werkstück zu erzeugen. Hierdurch wird der Einsatzbereich der erfindungsgemäßen Plattenaufteilanlage deutlich vergrößert.

Sind beide Bearbeitungswagen mit Sägen ausgestattet, kann beispielsweise die eine Säge eine Hauptsäge und die zweite Säge eine Vorritzsäge sein.

Zur Erhöhung der Flexibilität trägt bei, wenn jeder Bearbeitungswagen einen eigenen Antrieb zur Bewegung längs der Führungseinrichtung umfasst. Möglich ist aber auch, dass, beispielsweise über einen Zahnriemen oder eine Gewindestange nur ein einziger Antrieb sowohl mit dem einen als auch mit dem anderen Bearbeitungswagen koppelbar ist.

Wenn mindestens ein Werkzeug einer Bearbeitungseinrichtung um eine Achse längs zur Führungseinrichtung verschwenkbar ist, können im Falle eines Fräsers oder einer Säge beispielsweise Gehrungsschnitte eingebracht werden, und im Falle eines Bohrers können schräge Bohrungen in eine Platte eingebracht werden.

Als Fräser kommt insbesondere ein Fingerfräser in Frage, der sowohl zylindrisch oder auch konisch sein kann. Hierdurch sind ganz unterschiedliche Fräsformen realisierbar.

Besonders vorteilhaft ist es, wenn die erfindungsgemäße Plattenaufteilanlage einen automatischen Werkzeugwechsler umfasst, mit dem ein Werkzeug einer Bearbeitungseinrichtung ausgetauscht werden kann. Dies gestattet einen weitgehend automatischen Betrieb der Plattenaufteilanlage, wodurch vor allem Kosten und Zeit eingespart werden. Darüber hinaus kann die Flexibilität der Plattenaufteilanlage hierdurch nochmals verbessert werden, da dieselbe Werkzeugstation mit ganz unterschiedlichen Werkzeugen bestückt werden kann.

Nachfolgend werden Ausführungsformen der Erfindung unter Bezugnahme auf die beiliegende Zeichnung erläutert. In der Zeichnung zeigen:
- Figur 1: eine schematische Draufsicht auf eine erste Ausführungsform einer Plattenaufteilanlage;
- Figur 2: eine schematische Darstellung zweier Bearbeitungswagen der Plattenaufteilanlage von Figur 1; und
- Figur 3: eine Darstellung ähnlich Figur 2 einer zweiten Ausführungsform.

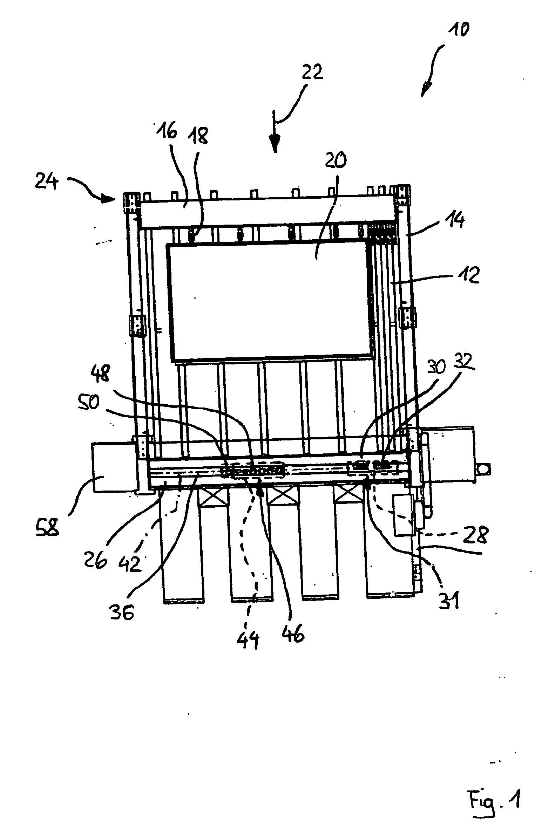

Eine erste Ausführungsform einer Plattenaufteilanlage trägt in Figur 1 insgesamt das Bezugszeichen 10. Sie umfasst einen Zuführtisch 12, der aus einer Vielzahl von Rollenbahnen (nicht dargestellt) besteht. Seitlich von dem Zufuhrtisch 12 sind Schienen 14 vorhanden, auf denen ein portalartiger Träger 16 beweglich geführt ist. Der Träger 16 wird auch als Programmschieber 16 bezeichnet. An dem Programmschieber 16 sind Spannzangen 18 befestigt. Die Spannzangen 18 können ein auf dem Zuführtisch 12 liegendes großformatiges und plattenförmiges Werkstück 20 greifen und sowohl in einer Förderrichtung (Pfeil 22) als auch entgegen dieser Förderrichtung 22 bewegen. Der Programmschieber 16 und die Spannzangen 18 definieren insoweit eine Vorschubvorrichtung 24.

An den Zuführtisch 12 schließt sich in Richtung der Vorschubrichtung 22 ein Maschinentisch 26 an, dessen Oberseite in der gleichen Ebene wie der Zuführtisch 12 liegt. Unterhalb des ersten Maschinentisches 26 ist ein erster Bearbeitungswagen 28 angeordnet, der eine erste Bearbeitungseinrichtung 31 umfasst, die aus einer Hauptsäge 30 und einer Vorritzsäge 32 besteht. Die beiden Sägen 30 und 32 werden jeweils durch ein Kreissägeblatt gebildet, dessen Rotationsachse parallel zur Vorschubrichtung 22 verläuft.

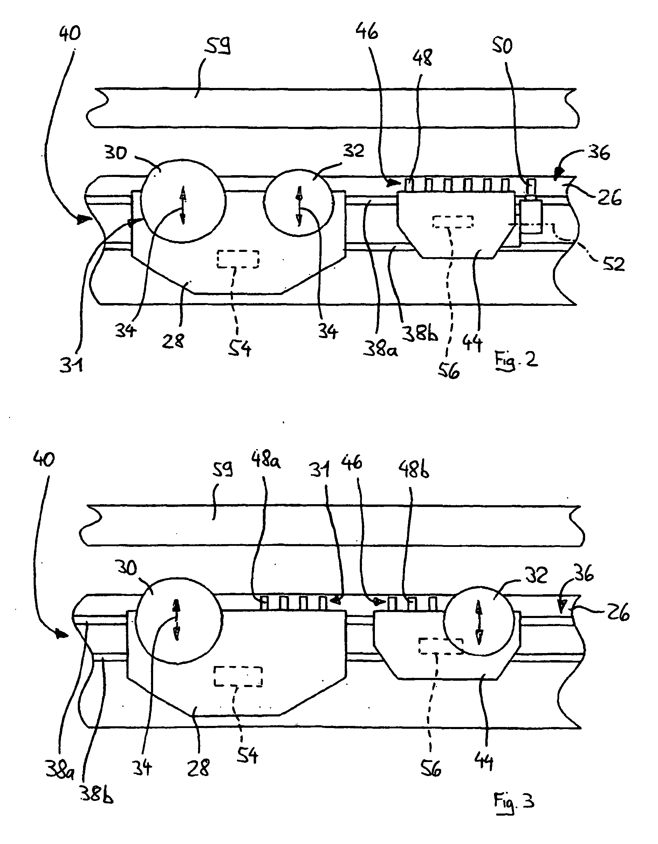

Sowohl die Hauptsäge 30 als auch die Vorritzsäge 32 können in vertikaler Richtung verstellt werden, was in Figur 2 durch Doppelpfeile 34 angedeutet ist. Hauptsäge 30 und Vorritzsäge 32 sind in der selben Ebene angeordnet, wobei diese Ebene senkrecht zur Blattebene der Figur 1 steht, und zwar im Bereich eines Sägespalts 36 im Maschinentisch 26 (Figur 1). Der erste Bearbeitungswagen 28 ist an einer durch zwei Schienen 38a und 38b (vergleiche Figur 2) gebildeten Führungseinrichtung 40 in einer Richtung quer zur Vorschubrichtung 22 verfahrbar gehalten. Die Schienen 38a und 38b sind an einem Maschinenträger unter dem Maschinentisch 26 befestigt. Durch die Sägen 30 und 32 und die Bewegungsrichtung des ersten Bearbeitungswagens 28 längs der Führungseinrichtung 40 wird eine Sägelinie 42 definiert.

Unterhalb des Maschinentisches 26 ist ferner ein zweiter Bearbeitungswagen 44 angeordnet, und zwar ist dieser auf denselben Schienen 38a und 38b der Führungseinrichtung 40 gehalten, so dass er quer zur Vorschubrichtung 22 verfahren werden kann. Der zweite Bearbeitungswagen 44 umfasst eine zweite Bearbeitungseinrichtung 46, die durch insgesamt sechs Bohrwerkzeuge 48, von denen aus Gründen der Darstellung jedoch nur eines mit einem Bezugszeichen versehen ist, sowie einen Fingerfräser 50 gebildet wird. Die Bohrwerkzeuge 48 und die Fingerfräser 50 weisen in der in Figur 2 dargestellten Betriebslage jeweils Längsachsen auf, die orthogonal zu einer Ebene sind, die durch den Zufuhrtisch 12 und den Maschinentisch 26 aufgespannt wird. Im Normalfall sind die Längsachsen also vertikal. Gleichwohl kann der Fingerfräser 50 um eine Schwenkachse 52 verschwenkt werden, die parallel zur Längsachse der Führungseinrichtung 40 bzw. parallel zur Sägelinie 42 verläuft.

Zur Bewegung längs der Schienen 38a und 38b verfügt der erste Bearbeitungswagen 28 über einen ersten Antrieb 54, und der zweite Bearbeitungswagen 44 verfügt über einen vom ersten Antrieb 54 unabhängigen zweiten Antrieb 56. Jeder Bearbeitungswagen 28 und 44 verfügt also über einen eigenen Antrieb 54 und 56, so dass die beiden Bearbeitungswagen 28 und 44 mindestens zeitweise vollkommen unabhängig voneinander längs der Führungseinrichtung 40 bewegt werden können. Hierzu verfügt die Plattenaufteilanlage 10 beispielsweise über eine längs der Schienen 38a und 38b verlaufende Zahnstange (nicht gezeigt), mit der ein jeweiliges Antriebsritzel (nicht gezeigt) des Antriebs 54 bzw. 56 kämmt.

Wie aus Figur 1 ersichtlich ist, verfügt die Plattenaufteilanlage 10 auf der in Figur 1 linken Seite des Maschinentisches 26 über einen automatischen Werkzeugwechsler 58. In diesen Werkzeugwechsler 58 kann der zweite Bearbeitungswagen 44 hineinfahren, um dort beispielsweise den zylindrischen Fingerfräser 50 durch einen konischen Fingerfräser zu ersetzen, um eines oder mehrere der Bohrwerkzeuge 48 durch andere Bohrwerkzeuge zu ersetzen, et cetera. Auch ein Austausch eines Werkzeugs aus Verschleißgründen kann in dem automatischen Werkzeugwechsler 58 vorgenommen werden.

Die in den Figuren 1 und 2 gezeigte Plattenaufteilanlage 10 kann beispielsweise folgendermaßen betrieben werden: Zunächst wird das Werkstück 20 von der Vorschubvorrichtung 24 in Vorschubrichtung 22 bewegt, bis es wie gewünscht relativ zur Sägelinie 42 positioniert ist. Dann wird ein nur in Figur 1 gezeichneter Druckbalken 59 auf das Werkstück 20 abgesenkt und dieses hierdurch zwischen Druckbalken und Maschinentisch 26 verklemmt. Während der zweite Bearbeitungswagen 44 in einer Randposition geparkt bleibt, beispielsweise im Werkzeugwechsler 58, wird durch eine Bewegung des ersten Bearbeitungswagens 28 bei aktivierter Vorritzsäge 32 und aktivierter Hauptsäge 30 ein Kopf- oder Aufteilschnitt am Werkstück 20 durchgeführt.

Nach dem Anheben des Druckbalkens 59 wird das Werkstück 20 von der Vorschubvorrichtung 24 neu relativ zur Sägelinie 42 positioniert. Nach erfolgter Neupositionierung des Werkstücks 20 wird der Druckbalken 59 wieder abgesenkt, und nun wird der zweite Bearbeitungswagen 44 sukzessive in verschiedene Bearbeitungspositionen gebracht und in diesen durch Aktivieren der Bohrwerkzeuge 48 Bohrlöcher in das Werkstück 20 eingebracht. Es versteht sich, dass hierzu die Bohrwerkzeuge 48 in ihrer Längsrichtung, also orthogonal zu der durch Zuführtisch 12 und Maschinentisch 26 aufgespannten Ebene bewegt werden können. Gegebenenfalls kann durch sukzessives Anheben des Druckbalkens und Aktivieren der Vorschubvorrichtung 24 das Werkstück 20 immer wieder neu positioniert werden, so dass in den neuen Positionen das Werkstück 20 wieder von den Bohrwerkzeugen 48 bearbeitet werden kann, um so ein ganz bestimmtes Bohrbild am Werkstück 20 zu realisieren.

Nach einer entsprechenden Neupositionierung des Werkstück 20 relativ zur Sägelinie 42 kann mittels des Fingerfräsers 50 eine Nut in die Unterseite des Werkstücks 20 eingebracht werden. Hierzu wird das Werkstück 20 wieder zwischen Druckbalken und Maschinentisch 26 verklemmt und der zweite Bearbeitungswagen 44 bei aktiviertem und angehobenem Fingerfräser 50 längs der Führungseinrichtung 40 bewegt. Auch hier versteht sich, dass der Fingerfräser 50 in einer Richtung orthogonal zu der durch Zuführtisch 12 und Maschinentisch 26 aufgespannten Ebene bewegt und positioniert werden kann. Durch einen solchen Bearbeitungsschritt kann also eine Nut in das Werkstück 20 eingebracht werden, welche parallel zur Sägelinie 42 verläuft. Selbstverständlich kann durch den Fingerfräser 50 aber nicht nur eine Nut in das Werkstück 20 eingebracht werden, sondern es kann in ähnlicher Weise auch ein Frässchnitt durchgeführt werden.

Möglich ist aber auch, mittels des Fingerfräsers 50 eine Nut in das Werkstück 20 einzubringen, welche parallel zur Vorschubrichtung 22 verläuft. Hierzu wird bei aktiviertem und entsprechend einer Sollstellung stationär positioniertem Fingerfräser 50 die Vorschubvorrichtung 24 aktiviert, das Werkstück 20 also während der Bearbeitung durch den (stationären) Fingerfräser 50 in Vorschubrichtung 22 (oder auch entgegen der Vorschubrichtung 22) bewegt. Auch hier versteht es sich, dass mittels des Fingerfräsers 50 nicht nur Nuten, sondern auch Frässchnitte erzeugt werden können, beispielsweise Tiefenschnitte zur Realisierung einer Buntaufteilung des Werkstücks 20.

Eine dritte Einsatzmöglichkeit des Fingerfräsers 50 besteht darin, eine Freiformbearbeitung an dem Werkstück 20 zu realisieren. Hierzu werden von einer nicht gezeigten Steuer- und Regeleinrichtung einerseits der zweite Bearbeitungswagen 44 bei aktiviertem Fingerfräser 50 und andererseits die Vorschubvorrichtung 24 in koordinierter Weise so bewegt, dass die gewünschte Freiformbearbeitung realisiert werden kann. Der Begriff "Freiformbearbeitung" bedeutet, dass mittels des Fingerfräsers 50 beliebige, also schräge oder gekrümmte Nuten oder Frässchnitte am Werkstück 20 realisiert werden können.

Eine alternative Ausgestaltung der beiden Bearbeitungswagen 28 und 44 zeigt Figur 3. Dabei gilt, dass solche Elemente und Bereiche, welche äquivalente Funktionen zu Elementen und Bereichen der Figur 2 aufweisen, die gleichen Bezugszeichen tragen.

Bei der in Figur 3 gezeigten Ausführungsform sind die beiden Bearbeitungswagen 28 und 44 insoweit ähnlich aufgebaut, als beide Bearbeitungswagen 28 und 44 jeweils sowohl eine Säge als auch Bohrer aufweisen. Der in Figur 3 linke Bearbeitungswagen 28 trägt als Bearbeitungseinrichtung 31 eine Hauptsäge 30 sowie vier Bohrwerkzeuge 48a, wobei auch hier aus Darstellungsgründen nur eines der Bohrwerkzeuge mit einem Bezugszeichen versehen ist. Der in Figur 3 rechte Bearbeitungswagen 44 trägt als Bearbeitungseinrichtung 46 eine Vorritzsäge 32 und drei Bohrwerkzeuge 48b (wobei er auch bspw. einen oder mehrere Fräs und/oder Bohrwerkzeuge tragen könnte). Wie bei der in Figur 2 dargestellten Ausführungsform sind die beiden Bearbeitungswagen 28 und 44 von Figur 3 an derselben Führungseinrichtung 40 gehalten, auf der sie mittels jeweils eigener Antriebe 54 und 56 unabhängig voneinander bewegbar sind.

Bei der in Figur 3 gezeigten Ausführungsform werden die beiden Bearbeitungswagen 28 und 44 bei einem Sägevorgang synchron, also beispielsweise wie miteinander verbunden verfahren, so dass das Vorritzen unmittelbar vor dem Hauptsägen erfolgt. Bei einem Bohr- oder Fräsvorgang dagegen werden die beiden Bearbeitungswagen 28 und 44 vollkommen unabhängig voneinander an jeweils gewünschte Positionen bewegt, so dass das Werkstück 20 an diesen unterschiedlichen Positionen gleichzeitig oder in kurzem zeitlichem Versatz bearbeitet werden kann.

## Patentansprüche

1. Plattenaufteilanlage (10) mit einem Zuführtisch (12) zum Auflagen mindestens eines plattenförmigen Werkstücks (20), einer Vorschubvorrichtung (24) zum Bewegen des Werkstücks (20) mindestens in einer Vorschubrichtung (22), mindestens einem ersten Bearbeitungswagen (28), der mindestens eine erste Bearbeitungseinrichtung (31) zum Bearbeiten des Werkstücks (20) trägt und an einer Führungseinrichtung (40) quer zur Vorschubrichtung (22) verfahrbar gehalten ist, und mindestens einem zweiten Bearbeitungswagen (44), der mindestens eine zweite Bearbeitungseinrichtung (46) zum Bearbeiten des Werkstücks (20) trägt und an der selben Führungseinrichtung (40) wie der erste Bearbeitungswagen (28) quer zur Vorschubrichtung (22) verfahrbar gehalten ist, **dadurch gekennzeichnet, dass** der erste Bearbeitungswagen (28) und der zweite Bearbeitungswagen (44) mindestens zeitweise unabhängig voneinander längs der Führungseinrichtung (40) bewegbar sind, wobei die erste Bearbeitungseinrichtung (31) mindestens eine Säge (30, 32) und die zweite Bearbeitungseinrichtung (46) mindestens einen Fräser (50) und, oder Bohrer (48) umfasst, derart, dass gleichzeitig oder in kurzem zeitlichem Versatz ein und dasselbe Werkstück (20) von verschiedenen Werkzeugen (30, 32, 48, 48a, 48b, 50) bearbeitet werden kann.

2. Plattenaufteilanlage (10) nach Anspruch 1, **dadurch gekennzeichnet, dass** die erste Bearbeitungseinrichtung (31) nur mindestens eine Säge (30, 32) und die zweite Bearbeitungseinrichtung (46) nur mindestens einen Fräser (50) und/oder Bohrer (48) umfasst.

3. Plattenaufteilanlage (10) nach Anspruch 1, **dadurch gekennzeichnet, dass** mindestens eine Bearbeitungseinrichtung (31, 46) mindestens eine Säge (30, 32) und mindestens einen Fräser und/oder Bohrer (48) umfasst.

4. Plattenaufteilanlage (10) nach Anspruch 3, **dadurch gekennzeichnet, dass** die erste Bearbeitungseinrichtung (31) eine Hauptsäge (30) und die zweite Bearbeitungseinrichtung (46) eine Vorritzsäge (32) umfassen.

5. Plattenaufteilanlage (10) nach einem der vorhergehenden Ansprüche, **dadurch gekennzeichnet, dass** jeder Bearbeitungswagen (28, 44) einen eigenen Antrieb (54, 56) zur Bewegung längs der Führungseinrichtung (40) umfasst.

6. Plattenaufteilanlage (10) nach einem der vorhergehenden Ansprüche, **dadurch gekennzeichnet, dass** mindestens ein Werkzeug (50) einer Bearbeitungseinrichtung (46) um eine Achse (52) verschwer.kbar ist, die parallel zu einer Längsachse der Führungseinrichtung (40) verläuft.

7. Plattenaufteilanlage (10) nach einem der Ansprüche 2 bis 6, **dadurch gekennzeichnet, dass** mindestens ein Fräser (50) ein Fingerfräser ist.

8. Plattenaufteilanlage nach Anspruch 7, **dadurch gekennzeichnet, dass** der Fingerfräser zylindrisch oder konisch ist.

9. Plattenaufteilanlage (10) nach einem der vorhergehenden Ansprüche, **dadurch gekennzeichnet, dass** sie einen automatischen Werkzeugwechsler (59) umfasst, mit dem ein Werkzeug (48) einer Bearbeitungseinrichtung (46) ausgetauscht werden kann.

10. Verfahren zum Betreiben einer Plattenaufteilanlage (10) nach einem der vorhergehenden Ansprüche, **dadurch gekennzeichnet, dass** ein Bearbeitungswagen (46), der einen Fraser (50) umfasst, und die Vorschubeinrichtung (24) während der Bearbeitung eines Werkstücks (20) durch den Fräser (50) koordiniert derart bewegt werden, dass eine Freiformbearbeitung des Werkstücks (20) durch den Fräser (50) erhalten wird.

11. Verfahren nach Anspruch 10, **dadurch gekennzeichnet, dass** bei einer Vorrichtung, bei der beide Bearbeitungswagen (28, 44) jeweils mindestens eine Säge (30, 32) aufweisen, die beiden Bearbeitungswagen (28, 44) bei einem Sägevorgang synchron bewegt werden und bei einem Bohr- oder Fräsvorgang unabhängig voneinander bewegbar bzw. positionierbar sind.

## Claims

1. A panel sizing assembly (10) having a delivery table (12) for laying at least one boardlike workpiece (20) thereon, a feed device (24) for moving the workpiece (20) in at least one feeding direction (22), at least one first machining carriage (28), which has at least one first machining device (31) for machining the workpiece (20) and is held movably transversely to the feeding direction (22) on a guide device (40), and at least one second machining carriage (44), which has at least one second machining device (46) for machining the workpiece (20) and is held movably transversely to the feeding direction (22) on the same guide device (40) as the first machining carriage (28), **characterized in that** the first machining carriage (28) and the second machining carriage (44) are at least intermittently movable independently of one another longitudinally of the guide device (40), and the first machining device (31) includes at least one saw (30, 32) and the second machining device (46) includes at least one milling cutter (50) and/or drill (48), such that simultaneously or at a brief chronological offset, one and the same workpiece (20) can be machined by various tools (30, 32, 48, 48a, 48b, 50).

2. The panel sizing assembly (10) according to claim 1, **characterized in that** the first machining device (31) includes only at least one saw (30, 32) and the second machining device (46) includes only at least one milling cutter (50) and/or drill (48).

3. The panel sizing assembly (10) according to claim 1, **characterized in that** at least one machining device (31, 46) includes at least one saw (30, 32) and at least one milling cutter and/or drill (48).

4. The panel sizing assembly (10) according to claim 3, **characterized in that** the first machining device (31) includes a main saw (30) and the second machining device (46) includes a pre-scoring saw (32).

5. The panel sizing assembly (10) according to one of the foregoing claims, **characterized in that** each machining carriage (28, 44) has its own drive (54, 56) for movement longitudinally of the guide device (40).

6. The panel sizing assembly (10) according to one of the foregoing claims, **characterized in that** at least one tool (50) of one machining device (46) is pivotable about an axis (52) which extends parallel to a longitudinal axis of the guide device (40).

7. The panel sizing assembly (10) according to one of claims 2-6, **characterized in that** at least one milling cutter (50) is an end-milling cutter.

8. The panel sizing assembly (10) according to claim 7, **characterized in that** the end-milling cutter is cylindrical or conical.

9. The panel sizing assembly (10) according to one of the foregoing claims, **characterized in that** it includes an automatic tool changer (59), with which a tool (48) of a machining device (46) can be replaced.

10. A method for operating a panel sizing assembly (10) according to one of the foregoing claims, **characterized in that** during the machining of a workpiece (20), a machining carriage (46), which includes a milling cutter (50), and the feed device (24) are moved, coordinated by the milling cutter (50), such that free-form machining of the workpiece (20) by the milling cutter (50) is obtained.

11. The method according to claim 10, **characterized in that** in a device in which both machining carriages (28, 44) each have at least one saw (30, 32), the two machining carriages (28, 44) are moved synchronously in a sawing operation and are movable or positionable independently of one another in a drilling or milling operation.

## Revendications

1. Installation de découpe de plaques (10) comprenant une table d'alimentation (12) sur laquelle sera posée au moins une pièce en forme de plaque (20), un dispositif d'avancement (24) destiné à déplacer la pièce (20) au moins dans une direction d'avancement (22), au moins un premier chariot d'usinage (28) portant au moins un premier dispositif d'usinage (31) destiné à usiner la pièce (20) et retenu mobile sur un dispositif de guidage (40) transversalement à la direction d'avancement (22), et au moins un second chariot d'usinage (44) portant au moins un second dispositif d'usinage (46) destiné à usiner la pièce (20) et retenu mobile sur le même dispositif de guidage (40) que celui du premier chariot d'usinage (28) transversalement à la direction d'avancement (22), **caractérisée en ce que** le premier chariot d'usinage (28) et le second chariot d'usinage (44) sont mobiles au moins temporairement indépendamment l'un de l'autre le long du dispositif de guidage (40), le premier dispositif d'usinage (31) comprenant au moins une scie (30, 32) et le second dispositif d'usinage (46) comprenant au moins une fraise (50) et/ou un foret (48), de telle sorte qu'une seule et même pièce (20) puisse être usinée par différents outils (30, 32, 48, 48a, 48b, 50) simultanément ou avec un léger décalage dans le temps.

2. Installation de découpe de plaques (10) selon la revendication 1, **caractérisée en ce que** le premier dispositif d'usinage (31) ne comprend qu'au moins une scie (30, 32) et le second dispositif d'usinage (46) ne comprend qu'au moins une fraise (50) et/ou un foret (48).

3. Installation de découpe de plaques (10) selon la revendication 1, **caractérisée en ce qu'**au moins un dispositif d'usinage (31, 46) comprend au moins une scie (30, 32) et au moins une fraise et/ou un foret (48).

4. Installation de découpe de plaques (10) selon la revendication 3, **caractérisée en ce que** le premier dispositif d'usinage (31) comprend une scie de tête (30) et le second dispositif d'usinage (46) comprend une scie d'incision (32).

5. Installation de découpe de plaques (10) selon l'une quelconque des revendications précédentes, **caractérisée en ce que** chaque chariot d'usinage (28, 44) comprend un entraînement propre (54, 56) destiné à le déplacer le long du dispositif de guidage (40).

6. Installation de découpe de plaques (10) selon l'une quelconque des revendications précédentes, **caractérisée en ce qu'**au moins un outil (50) d'un dispositif d'usinage (46) peut pivoter autour d'un axe (52) s'étendant parallèlement à un axe longitudinal du dispositif de guidage (40).

7. Installation de découpe de plaques (10) selon l'une quelconque des revendications 2 à 6, **caractérisée en ce qu'**au moins une fraise (50) est une fraise à queue.

8. Installation de découpe de plaques selon la revendication 7, **caractérisée en ce que** la fraise à queue est cylindrique ou conique.

9. Installation de découpe de plaques (10) selon l'une quelconque des revendications précédentes, **caractérisée en ce qu'**elle comprend un dispositif de changeur d'outil automatique (59) permettant d'échanger un outil (48) d'un dispositif d'usinage (46).

10. Procédé permettant de faire fonctionner une installation de découpe de plaques (10) selon l'une quelconque des revendications précédentes, **caractérisé en ce qu'**un chariot d'usinage (46) comprenant une fraise (50) et le dispositif d'avancement (24) sont déplacés de façon coordonnée pendant que la pièce (20) est usinée par la fraise (50), de telle sorte qu'un usinage à forme libre de la pièce (20) par la fraise (50) soit obtenu.

11. Procédé selon la revendication 10, **caractérisé en ce que**, dans le cas d'un dispositif pour lequel les deux chariots d'usinage (28, 44) comprennent respectivement au moins une scie (30, 32), les deux chariots d'usinage (28, 44) sont déplacés de manière synchrone au cours d'une opération de sciage et peuvent être déplacés ou positionnés indépendamment l'un de l'autre au cours d'une opération de perforation ou de sciage.
